# EUROPÄISCHE PATENTSCHRIFT

(11) **EP 3 483 991 B1**
(45) Veröffentlichungstag und Bekanntmachung des Hinweises auf die Patenterteilung: **20.04.2022**
(21) Anmeldenummer: 18204118.6
(22) Anmeldetag: 02.11.2018
(51) Int. Cl.: H02G 1/14, H01R 43/00, B29C 45/14, H01R 13/52, H02G 15/013

(54) **VERFAHREN ZUM UMSPRITZEN WENIGSTENS ZWEIER EINZELLEITUNGEN**
METHOD FOR OVERMOULDING AT LEAST TWO SINGLE CONDUCTORS
PROCÉDÉ DE MOULAGE PAR INJECTION D'AU MOINS DEUX CONDUCTEURS SIMPLES

(30) Priorität: 09.11.2017 DE 102017219923
(43) Veröffentlichungstag der Anmeldung: 15.05.2019
(73) Patentinhaber: BizLink Industry Germany GmbH, 91154 Roth (DE)
(72) Erfinder: UNTIEDT, Christoph, 49777 Klein Berßen (DE)
(74) Vertreter: Frenkel, Matthias Alexander

(56) Entgegenhaltungen:
- EP-A2- 1 699 116
- DE-A1-102004 034 102
- GB-A- 967 041
- JP-A- S5 321 791
- JP-U- H0 538 769
- US-A1- 2005 191 897

## Beschreibung

Die Offenbarung betrifft ein Verfahren zum Umspritzen wenigstens zweier Einzelleitungen sowie ein Dichtungselement und ein Verwenden eines Dichtungselements zum Abdichten wenigstens zweier Einzelleitungen während eines bereichsweisen Umspritzens der wenigstens zwei Einzelleitungen.

Ein solches Umspritzen dient dazu, die wenigstens zwei Einzelleitungen in einem Bereich abzudichten und mittels der erzeugten Umspritzung eine spätere Anbindung an einen dem umspritzten Bereich zugewandten rückseitigen Gehäuseabschnitt (der sogenannten "backshell") eines Steckerelements zu ermöglichen. Eine Umspritzung kann hier einen durch das Umspritzen erzeugten, die wenigstens zwei Einzelleitungen vollumfänglich umgebenden Mantel aus einem Vollmaterial einer Spritz-, Guss- und/oder Schaummasse bezeichnen. Beispielsweise kann ein Material der Umspritzung so gewählt werden, dass sich eine adhäsive und/oder eine stoffschlüssige Verbindung zwischen der Umspritzung und den Mänteln der wenigstens zwei Einzelleitungen ausbildet.

Die wenigstens zwei Einzelleitungen können im Sinne der Offenbarung beispielsweise Einzelleitungen eines Leitungsbündels beschreiben. Eine Einzelleitung kann einen elektrischen Leiter und eine diesen umgebende Leiterisolation bzw. einen Kabelmantel umfassen.

Es ist aus dem Stand der Technik bekannt, Leitungen mittels einer Umspritzung in einem Bereich abzudichten, der im späteren Betrieb einem Steckerelement zugewandt ist, um beispielsweise einen elektrischen Kontaktbereich der Leitung und des Steckerelements vor Umwelteinflüssen, Spritzwasser, etc. zu schützen. Genauer gesagt soll häufig der Kabelmantel der Leitung in dem beschriebenen Bereich in einer Längsrichtung zuverlässig gegen Feuchtigkeit abgedichtet werden.

Eine Umspritzung einer Leitung wird im Stand der Technik beispielsweise mittels eines Spritz(guss)- oder Schäumverfahrens erzeugt. Hierzu wird zumindest der zu umspritzende Bereich der Leitung in ein Formwerkzeug eingelegt. Anschließend wird das Formwerkzeug geschlossen und eine Spritz-, Guss- oder Schaummasse wird in das Formwerkzeug eingebracht.

Aus der JP S53 21791 A ist ein Verfahren zum Umspritzen mehrere Leitungen bekannt. Dabei wird eine Hilfsform mit mehreren Ausnehmungen verwendet, wobei jede der Leitungen durch eine der Ausnehmungen geführt wird. Mittels einer Hülse werden die freien Enden der Leitungen mit einem freien Ende einer Hauptleitung verbunden. Die Hilfsform wird dann an einem zweiteiligen Formwerkzeug angebracht, so dass sich die Enden der Leitungen und die Hülse in einem, durch die Hilfsform begrenzten Bereich befinden. Anschließend werden die Leitungen und die Hauptleitung, sowie die Hülse durch Füllen des Bereichs mit flüssigem Kunststoff umspritzt. Nach Verfestigung des Kunststoffs wird das Formwerkzeug geöffnet und die Hilfsform entnommen. Auf diese Weise erhält man ein wasserfestes Verbindungselement, durch das die Hauptleitung mit den Leitungen verbunden ist.

Aus der GB 967 041 A ist ein Verfahren zum Umspritzen mehrerer Leitungen bekannt. Dabei werden die Leitungen durch Öffnungen eines Positionierungselements geführt. Das Positionierelement wird dann in einem Formwerkzeug aufgenommen und umspritzt.

Aus US 2005 / 0 191 897 A1 ist einen Kabelverbinder für ein Kabel bekannt, das eine Vielzahl an Leitungspaaren umfasst, die in jeweiligen Hüllen angeordnet sind. Die Leitungspaare werden in ihrer jeweiligen Hülle durch ein Anordnungsteil geführt, wobei einzelne Leitungspaare in ihrer Hülle in bogenförmigen Ausnehmungen in dem Anordnungsteil angeordnet sind. Auf einer Innenseite des Anordnungsteils sind die Leitungspaare ohne ihre Hülle angeordnet. In einem Fertigungsschritt wird das Anordnungsteil von einer oberen und einer unteren Spritzgießform umschlossen. Die Leitungspaare werden mittels eines thermoplastischen Harzes auf einer Innenseite des Anordnungsteils umspritzt.

In heutigen Anwendungen weisen die zu umspritzenden Leitungen oder Leitungsbündel jedoch immer komplexere Umfangsgeometrien bezüglich ihres jeweiligen (Gesamt-)Querschnitts auf. Auch können die Umfangsgeometrien der zu umspritzenden Leitungen oder Leitungsbündel untereinander stark variieren, abhängig von der Leitungsart und der Leitungsanzahl bzw. des daran anzubindenden Steckerelements. Dies gilt insbesondere in Hinblick auf Steckersysteme mit einer Mehrzahl von Leitungen, wie beispielsweise QSFP-DD zu 8xSFP+, QSFP DD zu 4xQSFP und QSFP zu 4xSFP.

Es besteht somit ein Bedarf ein flexibles und kostengünstiges Verfahren zum Umspritzen wenigstens zweier Einzelleitungen bereitzustellen, das ein sicheres Abdichten der wenigstens zwei Einzelleitungen ermöglicht.

Hierfür wird ein Verfahren zum Umspritzen wenigstens zweier Einzelleitungen mit den Merkmalen des Patentanspruchs 1 vorgeschlagen. Ferner wird ein Dichtungselement zum Abdichten wenigstens zweier Einzelleitungen mit den Merkmalen des

Patentanspruchs 11 und ein Verwenden eines Dichtungselements zum Abdichten wenigstens zweier Einzelleitungen mit den Merkmalen des Patentanspruchs 12 vorgeschlagen. Weitere mögliche Ausführungsformen werden aus den abhängigen Ansprüchen 2 bis 10 sowie der nachstehenden Beschreibung ersichtlich.

Gemäß einem ersten Aspekt ist ein Verfahren zum Umspritzen wenigstens zweier Einzelleitungen vorgesehen, mit den Schritten:
- Aufnehmen der wenigstens zwei Einzelleitungen in einer Ausnehmung eines Dichtungselements, wobei die Ausnehmung des Dichtungselements im Wesentlichen komplementär zu einer Umfangsgeometrie der wenigstens zwei Einzelleitungen ausgebildet ist und wenigstens einen Ausnehmungsabschnitt umfasst, wobei eine der wenigstens zwei Einzelleitungen in den wenigstens einen Ausnehmungsabschnitt diesen berührend derart eingebracht wird, dass eine kraftschlüssige Verbindung zwischen dem wenigstens einen Ausnehmungsabschnitt und der einen der wenigstens zwei Einzelleitungen ausgebildet wird, sodass die eine der wenigstens zwei Einzelleitungen von dem wenigstens einen Ausnehmungsabschnitt in einer vorgesehenen Position relativ zu dem Dichtungselement fest angeordnet wird;
- Anbringen des Dichtungselements mit den darin aufgenommenen wenigstens zwei Einzelleitungen an einem Formwerkzeug;
- Umspritzen eines sich an das Dichtungselement anschließenden und durch das Dichtungselement begrenzten Bereichs der darin aufgenommenen wenigstens zwei Einzelleitungen; und
- Entnehmen des Dichtungselements und der darin aufgenommenen und bereichsweise umspritzten wenigstens zwei Einzelleitungen von dem Formwerkzeug.

Zum Aufnehmen der wenigstens zwei Einzelleitungen können die Einzelleitungen in die Ausnehmung des Dichtungselements eingebracht oder mit anderen Worten durch die Ausnehmung hindurch geführt werden. Die Ausnehmung des Dichtungselements kann sich beispielsweise in Dickenrichtung des Dichtungselements erstrecken. Es versteht sich, dass die in der Ausnehmung des Dichtungselements aufgenommenen wenigstens zwei Einzelleitungen somit abschnittsweise mit dem Dichtungselement, d.h. mit einer durch die Ausnehmung gebildeten Innenumfangsfläche des Dichtungselements, in Berührung stehen können. Die durch die Ausnehmung gebildete Innenquerschnittsfläche des Dichtungselements kann im Wesentlichen kongruent zu der Querschnittsfläche der wenigstens zwei Einzelleitungen sein. Alternativ dazu kann die durch die Ausnehmung gebildete Innenquerschnittsfläche des Dichtungselements dieselbe geometrische Gestalt wie die Querschnittsfläche der wenigstens zwei Einzelleitungen haben, aber geringfügig kleiner als diese sein, um die darin aufgenommene wenigstens zwei Einzelleitungen geringfügig zu klemmen. Hierbei kann eine Presspassung zwischen den wenigstens zwei Einzelleitungen und dem Dichtungselement realisiert werden. Durch eine im Wesentlichen und zumindest abschnittsweisen komplementären Ausbildung der Ausnehmung des Dichtungselements zu der Umfangsgeometrie der wenigstens zwei Einzelleitungen, können die wenigstens zwei Einzelleitungen nicht nur fixiert, sondern im Falle von mehreren Einzelleitungen und/oder eines Leitungsbündels auch in vorbestimmter Weise sortiert werden.

Der Schritt des Anbringens des Dichtungselements an dem Formwerkzeug kann gleichzeitig ein Fixieren und/oder Positionieren des Dichtungselements relativ zu dem Formwerkzeug umfassen.

In einer Weiterbildung des Verfahrens kann das Dichtungselement mit den darin aufgenommenen wenigstens zwei Einzelleitungen an dem Formwerkzeug angebracht werden. Demnach können durch den Schritt des Anbringens gleichzeitig in dem Dichtungselement bereits aufgenommene wenigstens zwei Einzelleitungen relativ zu dem Formwerkzeug angeordnet, ausgerichtet und/oder positioniert werden. Beispielsweise kann der zu umspritzende Bereich der wenigstens zwei Einzelleitungen dabei in einer Kavität des Formwerkzeugs angeordnet werden.

Somit versteht sich, dass die wenigstens zwei Einzelleitungen in die Ausnehmung des Dichtungselements eingebracht werden können, bevor das Dichtungselement mit den darin aufgenommenen wenigstens zwei Einzelleitungen an dem Formwerkzeug angebracht wird. Alternativ dazu kann zunächst das Dichtungselement an dem Formwerkzeug angebracht werden und anschließend können die wenigstens zwei Einzelleitungen in der

Ausnehmung des Dichtungselements aufgenommen werden. In beiden Fällen sind nach den Schritten des Aufnehmens und des Anbringens die wenigstens zwei Einzelleitungen, das Dichtungselement und das Formwerkzeug relativ zueinander fest positioniert, das heißt angeordnet und/oder ausgerichtet.

Der grundlegende Aufbau eines Formwerkzeugs zum Erzeugen einer Umspritzung wenigstens zweier Leitungen ist dem Fachmann aus dem Stand der Technik bekannt und ist daher hier nicht im Detail beschrieben. Im Nachstehenden wird daher lediglich auf Besonderheiten des hier offenbarten Formwerkzeugs eingegangen.

Das Dichtungselement wird derart an dem Formwerkzeug angebracht und angeordnet, dass es in einem geschlossenen Zustand des Formwerkzeugs die Kavität zu wenigstens einer Seite bzw. in eine Richtung begrenzt. Wird das Spritz-, Guss- oder Schaummaterial zum Umspritzen eines Bereichs der wenigstens zwei Einzelleitungen in die Kavität eingebracht, begrenzt das Dichtungselement den Bereich der wenigstens zwei Einzelleitungen, der umspritzt wird, zu einer Seite hin. Mit anderen Worten wird die zu erzeugende Umspritzung wenigstens durch die Umfangsflächen der Kavität des Formwerkzeugs und durch das Dichtungselement begrenzt.

Durch das Begrenzen der Umspritzung sowie durch das Fixieren und Sortieren der wenigstens zwei Einzelleitungen mittels des Dichtungselements, kann eine dichte und saubere Umspritzung sichergestellt werden. Demnach ist es möglich, selbst Einzelleitungen und/oder Leitungsbündel mit komplexen Umfangsgeometrien oder komplexen Leitungsanordnungen, die zum Beispiel zu umspritzende Hinterschnitte aufweisen, in dem vorgesehenen Bereich sicher und dichtend zu umspritzen. So kann beispielsweise eine optimale Anbindung der wenigstens einen zu umspritzenden Leitung an ein SFP- (= small form-factor pluggable), ein QSFP- (= quad small form-factor pluggable), ein QSFP-DD- (= quad small form-factor pluggable double density) Steckerelement oder Ähnliches sichergestellt werden.

In einer Ausführungsform kann das Verfahren den weiteren Schritt umfassen: Entfernen des Dichtungselements von den bereichsweise umspritzten wenigstens zwei Einzelleitungen. Es versteht sich, dass hierbei das Dichtungselement von den wenigstens zwei Einzelleitungen entfernt werden kann oder die wenigstens zwei Einzelleitungen von dem Dichtungselement entfernt werden können, ohne die wenigstens zwei Einzelleitungen dabei zu beschädigen. Somit verbleibt das Dichtungselement im Betrieb der wenigstens zwei Einzelleitungen nicht an den Einzelleitungen, sondern wird lediglich als Hilfsmittel in deren Herstellungsprozess oder Vorbereitungsprozess verwendet.

In einer Weiterbildung des Verfahrens kann das Dichtungselement zum Entfernen von den bereichsweise umspritzten wenigstens zwei Einzelleitungen zerstört werden. In diesem Fall ist das Dichtungselement nur zur Einmalverwendung vorgesehen. Für jede Umspritzung zweier zu umspritzender Einzelleitungen oder eines zu umspritzenden Leitungsbündels kann somit ein eigenes Dichtungselement zur Verfügung gestellt werden.

Ein Zerstören des Dichtungselements nach dem Umspritzen der wenigstens zwei Einzelleitungen kann beispielsweise erforderlich sein, da ein Abstreifen des Dichtungselements über die gesamte Leitungslänge Schäden am Leitungsmantel verursachen könnte. Auch kann ein Abstreifen des Dichtungsplättchens von den wenigstens zwei Einzelleitungen in manchen Fällen gar nicht möglich sein, da die wenigstens zwei Einzelleitungen endseitig (auf einer der Umspritzung abgewandten Endseite) bereits montiert oder konfektioniert sein können.

Das Dichtungselement kann für eine zerstörende Entfernung in einer Ausführungsform wenigstens eine Sollbruchstelle aufweisen. Ein Grundkörper des Dichtungselements kann insgesamt eine möglichst geringe Materialstärke aufweisen, sodass es auf einfache Weise zerstörbar ist, zum Beispiel mit oder ohne Zuhilfenahme eines Schneidwerkzeugs.

Alternativ zu einem Entfernen des Dichtungselements unter Zerstörung des Dichtungselements kann das Dichtungselement auch derart ausgebildet sein, dass es zum Aufnehmen der wenigstens zwei Einzelleitungen geöffnet und geschlossen und zum späteren Entfernen wieder geöffnet werden kann. Hierfür kann ein Abschnitt des Dichtungselements gegenüber einem anderen Abschnitt des Dichtungselements schwenkbar sein. Auch kann das Dichtungselements zum Öffnen und Schließen beispielsweise einen Rast- oder Haltemechanismus aufweisen. In diesem Fall kann das Dichtungselement mehrfach verwendet werden.

In einer Ausführungsform kann das Dichtungselement plattenförmig sein. Mit anderen Worten kann das Dichtungselement ein Dichtungsplättchen sein. Die Ausnehmung des Dichtungselements kann sich in Dickenrichtung des Dichtungselements erstrecken. Das Dichtungsplättchen kann beispielsweise einen im Wesentlichen rechteckigen oder quadratischen Außenquerschnitt haben.

In einer Weiterbildung des Verfahrens kann das Dichtungselement zum Anbringen an dem Formwerkzeug zumindest abschnittsweise in eine an dem Formwerkzeug ausgebildete Dichtungselementaufnahme eingebracht werden. Das Dichtungselement kann kraft- und oder formschlüssig in der Dichtungselementaufnahme aufgenommen und gehalten werden. Die Dichtungselementaufnahme kann im Wesentlichen komplementär zu einem Abschnitt des Dichtungselements ausgebildet sein. Ist das Dichtungselement beispielsweise in Form eines Dichtungsplättchens ausgebildet, kann die Dichtungselementaufnahme ein Schlitz oder Spalt in dem Formwerkzeug sein. Die Dichtungselementaufnahme ist derart an dem Formwerkzeug angeordnet und ausgebildet, dass das daran angebrachte Dichtungselement die Kavität des Formwerkzeugs zu wenigstens einer Seite hin begrenzt.

In einer Ausführungsform kann das Dichtungselement ein Kunststoffbauteil sein. Mit anderen Worten kann das Dichtungselement überwiegend oder vollständig aus Kunststoff hergestellt sein. Das Material kann unter anderem nach Maßgabe der gewünschten Festigkeits- und/oder Wärmeleitfähigkeitseigenschaften gewählt werden.

Das Dichtungselement kann im Rahmen des beschriebenen Verfahrens oder unabhängig davon mittels eines additiven bzw. generativen Fertigungsverfahrens hergestellt werden. Hierdurch kann die Gestalt, d.h. die Form und Dimensionen des Dichtungselements samt dessen Ausnehmung, schnell und flexibel an unterschiedliche Leitungsgeometrien, Leitungsstrukturen, an die Anzahl von Leitungen und/oder an schwankende Leitungsdurchmesser angepasst werden. Beispielsweise kann das Dichtungselement mittels eines 3D-Druckverfahrens hergestellt werden.

Alternativ zu einer additiven Fertigung kann das Dichtungselement im Rahmen des beschriebenen Verfahrens oder unabhängig davon mittels eines Spritzgussverfahrens hergestellt werden. Ein solches Herstellungsverfahren kann beispielsweise zur Massenproduktion von Dichtungselementen verwendet werden und ist kostengünstiger als additive Fertigungsverfahren. Beim Spritzgießen können beispielsweise Kunststoffmaterialien, PCB-Materialien, etc. vorgesehen werden.

Das Formwerkzeug kann in einer Ausführungsform ein metallisches Material umfassen, um während des Umspritzens Wärme abzuleiten. So kann das Formwerkzeug zumindest in einem Bereich, an dem das Dichtungselement angebracht ist, aus Metall hergestellt sein, also beispielsweise in dem Bereich der Dichtungselementaufnahme. Hierdurch kann verhindert werden, dass ein aus Kunststoff hergestelltes Dichtungselement aufgrund des Wärmeeintrags während des Umspritzens aufschmilzt, was sich negativ auf die Fixierung und Begrenzung der wenigstens zwei Einzelleitung sowie das spätere Entfernen auswirken könnte.

Im Verfahren gemäß der Erfindung werden wenigstens zwei Einzelleitungen umspritzt werden, wobei die Ausnehmung des Dichtungselements wenigstens einen Ausnehmungsabschnitt umfasst. In dem Schritt des Aufnehmens wird eine der wenigstens zwei Einzelleitungen in den wenigstens einen Ausnehmungsabschnitt eingebracht und von diesem in einer vorgesehenen Position relativ zu dem Dichtungselement fixiert. Dabei ist bereits zwischen dem wenigstens einen Ausnehmungsabschnitt und der einen der wenigstens zwei Einzelleitungen eine kraftschlüssige Verbindung ausgebildet, sodass die eine der wenigstens zwei Einzelleitungen von dem wenigstens einen Ausnehmungsabschnitt gehalten und relativ zu dem Dichtungselement ausgerichtet und fest angeordnet ist. Dies erleichtert das Einbringen bzw. Aufnehmen weiterer Leitungen in die/der Ausnehmung des Dichtungselements. Der wenigstens eine Ausnehmungsabschnitt kann im Wesentlichen und zumindest abschnittsweise komplementär zu einem Außenumfang der einen der wenigstens zwei Einzelleitungen ausgebildet sein. Es versteht sich, dass mehr als zwei Einzelleitungen zum Aufnehmen in dem Dichtungselement vorgesehen sein können, wobei das Dichtungselement mehrere Ausnehmungsabschnitte der vorstehend beschriebenen Art umfassen kann. Hierdurch kann zumindest ein Teil aller aufzunehmenden Einzelleitungen nacheinander in die Ausnehmung des Dichtungselements eingeführt werden, wobei die bereits eingeführten Einzelleitungen durch die jeweils zugehörigen Ausnehmungsabschnitte wie vorstehend beschrieben positioniert und fixiert werden.

Es versteht sich, dass das Verfahren vor, zwischen und/oder nach den beschriebenen Verfahrensschritten weitere Schritte umfassen kann, die in herkömmlichen Verfahren zum Umspritzen von Einzelleitungen durchgeführt werden.

Die Erfindung betrifft auch in Dichtungselement gemäß Anspruch 11 zum Abdichten wenigstens zweier Einzelleitungen während eines bereichsweisen Umspritzens der wenigstens zwei Einzelleitungen. Das Dichtungselement umfasst einen Grundkörper mit einer Ausnehmung, die im Wesentlichen komplementär zu einer Umfangsgeometrie der wenigstens zwei Einzelleitungen ausgebildet ist, um die wenigstens zwei Einzelleitungen aufzunehmen, wobei die Ausnehmung wenigstens einen Ausnehmungsabschnitt umfasst, wobei eine der wenigstens zwei Einzelleitungen in den wenigstens einen Ausnehmungsabschnitt diesen berührend derart einbringbar ist, dass eine kraftschlüssige Verbindung zwischen dem wenigstens einen Ausnehmungsabschnitt und der einen der wenigstens zwei Einzelleitungen ausgebildet ist, sodass die eine der wenigstens zwei Einzelleitungen von dem wenigstens einen Ausnehmungsabschnitt in einer vorgesehenen Position relativ zu dem Dichtungselement fest anordenbar ist. Das Dichtungselement ist derart dimensioniert und ausgebildet, dass es an einer Dichtungselementaufnahme eines Formwerkzeugs anbringbar ist.

Die Erfindung betrifft auch ein Verwenden eines Dichtungselements zum Abdichten wenigstens zweier Einzelleitungen während eines bereichsweisen Umspritzens der wenigstens zwei Einzelleitungen gemäß Anspruch 12. Das Dichtungselement umfasst einen Grundkörper mit einer Ausnehmung, die im Wesentlichen komplementär zu einer Umfangsgeometrie der wenigstens zwei Einzelleitungen ausgebildet ist, um die wenigstens zwei Einzelleitungen aufzunehmen, wobei die Ausnehmung wenigstens einen Ausnehmungsabschnitt umfasst, wobei eine der wenigstens zwei Einzelleitungen in den wenigstens einen Ausnehmungsabschnitt diesen berührend derart einbringbar ist, dass eine kraftschlüssige Verbindung zwischen dem wenigstens einen Ausnehmungsabschnitt und der einen der wenigstens zwei Einzelleitungen ausgebildet ist, sodass die eine der wenigstens zwei Einzelleitungen von dem wenigstens einen Ausnehmungsabschnitt in einer vorgesehenen Position relativ zu dem Dichtungselement fest anordenbar ist. Ferner ist das Dichtungselement an einem Formwerkzeug anbringbar.

Obgleich einige Aspekte und Merkmale lediglich in Bezug auf das Verfahren zum Umspritzen wenigstens zweier Einzelleitungen beschrieben worden sind, können diese entsprechend für das Dichtungselement und/oder das Verwenden eines Dichtungselements sowie für deren Weiterbildungen gelten.

Die vorliegende Offenbarung soll weiter anhand von Figuren erläutert werden. Diese Figuren zeigen schematisch:
- Figur 1: ein Ausführungsbeispiel eines Dichtungselements in einer Seitenansicht;
- Figur 2: das Dichtungselement aus Figur 1 in einer perspektivischen Ansicht;
- Figur 3: ein Ausführungsbeispiel eines Formwerkzeugs mit einem daran angebrachten Dichtungselement aus Figur 1 in einer perspektivischen Ansicht;
- Figur 4: das Formwerkzeug aus Figur 3 mit dem daran angebrachten Dichtungselement aus Figur 1 in einer Draufsicht;
- Figur 5: das Formwerkzeug aus Figur 3 mit dem daran angebrachten Dichtungselement aus Figur 1 und einem Leitungsbündel in einer Draufsicht;
- Figur 6: ein Ausführungsbeispiel eines an einem Steckerelement angebrachten Leitungsbündels in einer perspektivischen Ansicht; und
- Figur 7: das an einem Steckerelement angebrachte Leitungsbündel aus Figur 6 in einer Seitenansicht.

Im Folgenden werden, ohne hierauf beschränkt zu sein, spezifische Details dargelegt, um ein vollständiges Verständnis der vorliegenden Offenbarung zu liefern. Es ist einem Fachmann jedoch klar, dass die vorliegende Offenbarung in anderen Ausführungsbeispielen verwendet werden kann, die von den nachfolgend dargelegten Details abweichen können.

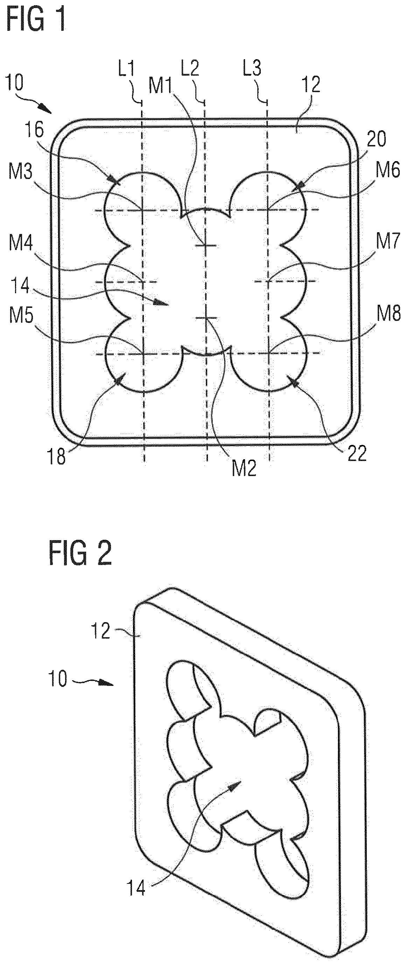

Die Figuren 1 und 2 zeigen ein Ausführungsbeispiel eines Dichtungselements 10 in einer Seitenansicht und in einer perspektivischen Ansicht. Das dargestellte Dichtungselement 10 in einem Verfahren zum Umspritzen wenigstens einer Leitung (in den Figuren 1 und 2 nicht dargestellt), beispielsweise eines Leitungsbündels, verwendbar.

Das Dichtungselement 10 ist in dem gezeigten Ausführungsbeispiel ein Dichtungsplättchen mit einem plattenförmigen Grundkörper 12, der einen im Wesentlichen quadratischen Außenumfang mit abgerundeten Kanten aufweist. Das Dichtungselement 10 umfasst eine Ausnehmung 14, die sich in Dickenrichtung des Dichtungselements 10 vollständig durch den Grundkörper 12 hindurch erstreckt. Die Ausnehmung 14 ist mittig des Grundkörpers 12 angeordnet, d.h. ein minimaler Abstand zwischen der Kontur der Ausnehmung und der Außenkontur des Dichtungselements 10 ist zu jeder Seite hin in etwa gleich.

Die Ausnehmung 14 ist in ihrer Gestalt komplementär zu einem darin aufzunehmenden Leitungsbündel mit acht Leitungen ausgebildet. Demnach entspricht die Geometrie der Kontur der in Figur 1 in der Draufsicht dargestellten Ausnehmung 14 der Geometrie des Außenumfangs des Querschnitts des darin aufzunehmenden Leitungsbündels.

Die aufzunehmenden Einzelleitungen des Leitungsbündels haben jeweils eine kreisförmige Querschnittsfläche mit demselben Durchmesser. Zur Veranschaulichung der Anordnung der Leitungen des Leitungsbündels sind die Mittelpunkte M1 bis M8 der Leitungen in Figur 1 angedeutet, obgleich die aufzunehmenden Leitungen aus Übersichtsgründen nicht dargestellt sind.

Wie aus der Gestalt der komplementären Ausnehmung 14 zu erkennen ist, weist das hier aufzunehmende Leitungsbündel eine Leitungsanordnung auf bzw. soll eine Leitungsanordnung aufweisen, bei der zwei zueinander benachbarte und sich tangierende Leitungen, deren Mittelpunkte M1 und M2 auf einer ersten Linie L1 liegen, in der Mitte des Leitungsbündels angeordnet sind. Diese beiden Leitungen werden hier als innenliegende Leitungen bezeichnet.

Zu der in Figur 1 gezeigten linken Seite und zu der in Figur 1 gezeigten rechten Seite der ersten Linie L1 der innenliegenden Leitungen sind jeweils drei Leitungen angeordnet, deren Mittelpunkte M3 bis M5 und M6 bis M8 jeweils auf einer weiteren Linie L2, L3 liegen. Die weiteren Linien L2, L3 sind parallel zu der ersten Linie L1 angeordnet. Die jeweils mittlere Leitung der drei auf einer weiteren Linie L2, L3 liegenden Leitungen tangiert die beiden benachbarten Leitungen. Ferner tangieren diese beiden mittleren Leitungen jeder der beiden innenliegenden Leitungen, wobei die beiden äußeren Leitungen der drei auf einer weiteren Linie L2, L3 liegenden Leitungen jeweils nur eine der beiden innenliegenden Leitungen tangieren. Demnach sind die drei Leitungen rechts der innenliegenden Leitungen und die drei Leitungen links der innenliegenden Leitungen hinsichtlich ihrer Mittelpunkte sowohl in vertikaler als auch in horizontaler Richtung versetzt angeordnet. Es versteht sich, dass in weiteren Ausführungsbeispielen auch Leitungsbündel mit anderen Anordnungen und/oder Leitungsanzahlen möglich sind.

Die Ausnehmung 14 ist stets komplementär zu der aufzunehmenden Leitung bzw. dem Leitungsbündel ausgebildet. Es ist anzumerken, dass die sich zwischen den Leitungen des Leitungsbündels ergebenden Zwischenräume in der Ausnehmung 14 des Dichtungselements 10 nicht zu erkennen sind, da das Dichtungselement 10 eine einzige Ausnehmung 14 umfasst, deren Querschnitt kongruent zu dem aus Leitungen und Zwischenräumen bestehenden Querschnitt des Leitungsbündels ist.

Die Ausnehmung 14 des in den Figuren 1 und 2 im Detail dargestellten Dichtungselements 10 umfasst vier Ausnehmungsabschnitte 16, 18, 20, 22, in die jeweils eine Leitung des Leitungsbündels eingebracht und mittels des zugehörigen Ausnehmungsabschnitts 16, 18, 20, 22 in einer vorgesehenen Position relativ zu dem Dichtungselement 10 fixiert werden kann. Wird eine Leitung in den zugehörigen Ausnehmungabschnitt 16, 18, 20, 22 eingebracht, steht sie im Bereich des Dichtungselements 10 hier über wenigstens drei Viertel ihres Umfangs in Kontakt mit dem Innenumfang des Dichtungselements 10, genauer gesagt des jeweiligen Ausnehmungsabschnitts 16, 18, 20, 22. Hierdurch wird diese eingebrachte Leitung von dem wenigstens einen Ausnehmungsabschnitt 16, 18, 20, 22 gehalten und relativ zu dem Dichtungselement 10 ausgerichtet und fest angeordnet ist. Dies erleichtert das Einbringen bzw. Aufnehmen der weiterer Leitungen in die/der Ausnehmung 14 des Dichtungselements 10.

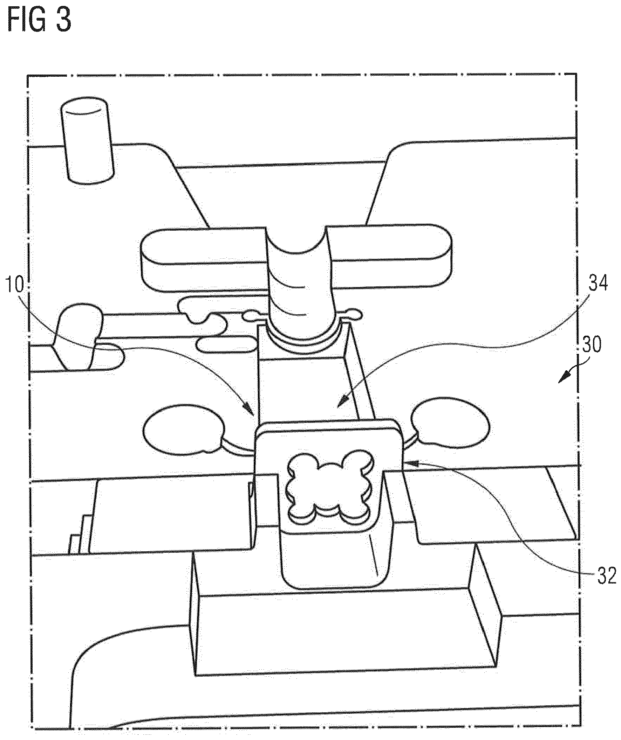

Die Figuren 3 bis 5 zeigen den unteren Teil eines Formwerkzeugs 30 mit einem daran angebrachten Dichtungselement 10. Der Aufbau des Formwerkzeugs 30 entspricht im Wesentlichen dem grundsätzlichen Aufbau bekannter Formwerkzeuge zum Umspritzen von Leitungen und wir daher hier nicht im Detail erläutert.

Im Unterschied zu bekannten Formwerkzeugen weist das in Figur 3 gezeigte Formwerkzeug 30 eine Dichtungselementaufnahme 32 auf. Diese ist in Form eines Spalts und komplementär zu dem Dichtungselement 10 bzw. dem Dichtungsplättchen ausgebildet. Das Dichtungselement 10 ist in den Figuren 3 bis 5 jeweils in der Dichtungselementaufnahme 32 aufgenommen. Durch die formschlüssige Verbindung des Dichtungselements 10 mit der Dichtungselementaufnahme 32 wird das Dichtungselement 10 im Betrieb fest in der vorgesehenen Position gehalten. Mit anderen Worten wird das Dichtungselement 10 durch das Einbringen in der Dichtungselementaufnahme 32 des Formwerkzeugs 30 relativ zu dem Formwerkzeug 30 und damit auch relativ zu einer Kavität 34 des Formwerkzeugs positioniert.

Ein Einbringen des Dichtungselements 10 in der Dichtungselementaufnahme 32 begrenzt die Kavität 34, wie in den Figuren 3 bis 5 zu erkennen ist. Ein der Kavität 34 zugeführtes Spritz-, Guss- oder Schaummaterial zum Umspritzen eines in der Kavität 34 angeordneten Bereichs einer Leitung oder hier eines Leitungsbündels kann sich somit nur bis zu dem Dichtungselement 10 in der Kavität 34 ausbreiten, genauer gesagt bis zu der der Kavität 34 zugewandten Seitenfläche des Dichtungselements 10. Dies ist weiter unten in Bezug auf den zugehörigen Verfahrensschritt näher beschriebenen.

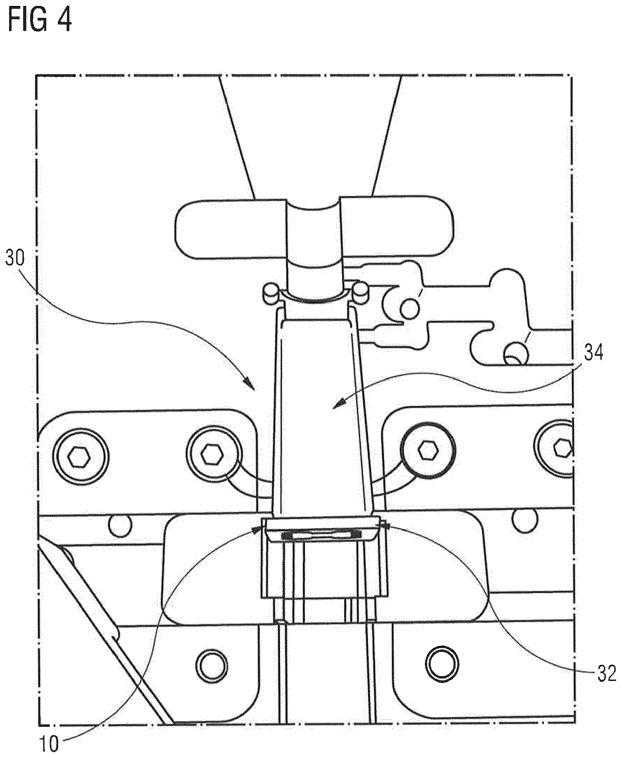

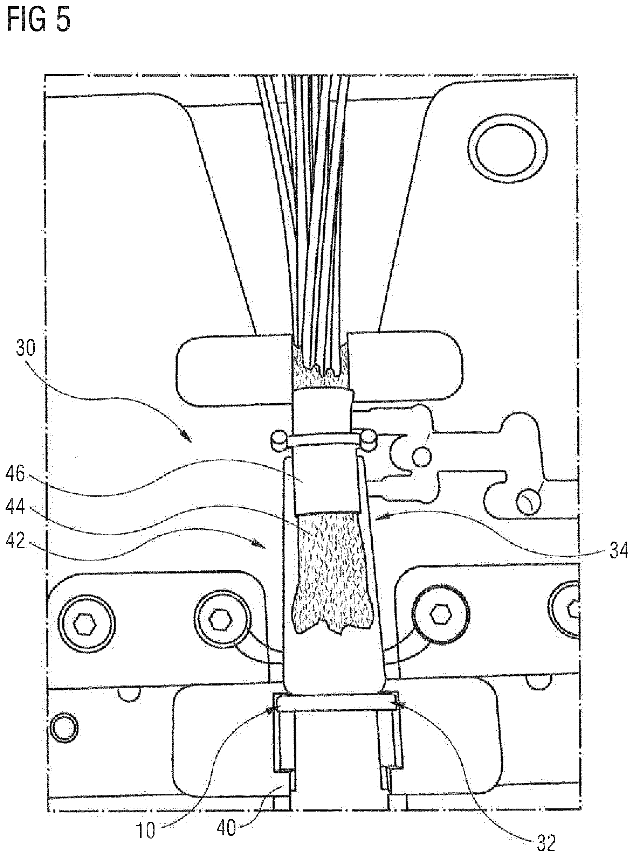

In Figur 5 ist ebenfalls der untere Teil des Formwerkzeugs 30 gezeigt. Jedoch ist im Unterschied zu den Figuren 3 und 4 ein acht Einzelleitungen umfassendes Leitungsbündel 40 der vorstehend beschriebenen Art gezeigt, das in der Ausnehmung des Dichtungselements 10 aufgenommen ist und sich durch die Kavität 34 des Formwerkzeugs 30 hindurch erstreckt. Durch die Fixierung des Leitungsbündels 40 mittels des an der Dichtungselementaufnahme 32 des Formwerkzeugs 30 angebrachten Dichtungselements 10, ist das Leitungsbündel 40 relativ zu der Kavität 34 des Formwerkzeugs 30 wie vorgesehen ausgerichtet. Ein zu umspritzender Bereich 42 des Leitungsbündels 40 ist somit in der Kavität 34 angeordnet. Auch ist zu erkennen, das der zu umspritzende Bereich 42 des Leitungsbündels 40 auf herkömmliche Weise mit weiteren Zusatzelementen, wie beispielsweise einer Kabelabschirmung 44 und einer Hülse 46, versehen ist. Diese Zusatzelemente sollen ebenfalls von der Umspritzung eingeschlossen werden.

In Figur 5 ist die Ausnehmung des Dichtungselements 10 vollständig von dem Leitungsbündel 40 ausgefüllt, sodass kein Hohlraum oder keine Lücke zwischen dem Dichtungselement 10 und dem Leitungsbündel 40 im Bereich der Ausnehmung besteht. Die Kavität 34 ist somit zu einer Seite hin vollständig durch das Dichtungselement 10 und das darin aufgenommene Leitungsbündel begrenzt. Wird Spritz-, Guss- oder Schaummaterial zum Umspritzen des Bereichs 42 des Leitungsbündels 40 in die Kavität 34 eingespritzt, verteilt es gleichmäßig und optimal um die zu umspritzenden Komponenten. Dies gilt trotz der vergleichsweise komplexen Struktur des Leitungsbündels 40 auch für den innerhalb der Kavität 34 an das Dichtungselement 10 angrenzenden Bereich des Leitungsbündels 40, in dem dieses aufgrund der beschriebenen Anordnung der acht Leitungen zu umspritzende Hinterschnitte aufweist.

Unter Berücksichtigung der vorstehenden Erläuterungen zu den beschriebenen Komponenten ist nachstehend ein Ausführungsbeispiel eines Verfahrens zum Umspritzen des Leitungsbündels 40 beschrieben.

Bei diesem Verfahren wird in einem ersten Schritt das Dichtungselement 10 bereitgestellt.

Anschließend wird in einem zweiten Schritt das Leitungsbündel 40 in der Ausnehmung 14 des Dichtungselements 10 aufgenommen. Dazu werden die acht Einzelleitungen nacheinander in die Ausnehmung eingebracht (u.a. in die Ausnehmungsabschnitte 16, 18, 20, 22), die komplementär zu der Umfangsgeometrie des Leitungsbündels 40 ausgebildet ist. Dadurch wird das Leitungsbündel 40 wie vorgesehen sortiert, sodass die acht Leitungen nach dem Einbringen in die Ausnehmung 14 zueinander fixiert und angeordnet sowie relativ zu dem Dichtungselement 10 fest positioniert sind.

In einem darauffolgenden dritten Verfahrensschritt wird das Dichtungselement 10 samt des darin aufgenommenen Leitungsbündels 40 in die Dichtungselementaufnahme 32 des Formwerkzeugs 30 eingesetzt, sodass das Dichtungselement 10 und die Dichtungselementaufnahme 32 miteinander in Eingriff stehen (siehe Figur 5). Bei diesem dritten Schritt wird das Dichtungselement 10 und das darin aufgenommene Leitungsbündel 40 relativ zu dem Formwerkzeug 30 positioniert. Auch wird das Leitungsbündel 40 dadurch wie gewünscht ausgerichtet, wobei der zu umspritzende Bereich 42 wie in Figur 5 gezeigt in der Kavität 34 angeordnet ist.

Zwischen dem zweiten und dritten Schritt können in einem Zwischenschritt noch die Zusatzkomponenten wie die Kabelabschirmung 44 und die Hülse 46 an dem Leitungsbündel 40 angeordnet werden. Alternativ dazu kann dies auch bereits vor Beginn des hier beschriebenen Verfahrens durchgeführt werden. In dem letztgenannten Fall sind die Leitungen entsprechend mit einem entgegengesetzten Ende durch die Ausnehmung des Dichtungselements zu führen.

Ferner versteht sich, dass die Reihenfolge der Schritte zwei und drei vertauscht werden kann. So kann zunächst das Dichtungselement an dem Formwerkzeug angebracht werden, wobei erst danach das Leitungsbündel in der Ausnehmung des bereits angebrachten und somit positionierten Dichtungselements aufgenommen wird.

In einem vierten Schritt wird das Formwerkzeug 30 geschlossen, d.h. der obere Teil des Formwerkzeugs 30 wird auf den in den Figuren 3 bis 5 gezeigten unteren Teil aufgesetzt. Dadurch wird die Kavität 34 zu allen Seiten hin geschlossen.

In einem fünften Schritt wird die Kavität 34 über eine Düse mit Kunststoff-Spritz-, Guss- und/oder Schaummasse beaufschlagt. Diese Masse verteilt sich in der Kavität 34 gleichmäßig um die zu umspritzenden Komponenten des sich an das Dichtungselement 10 anschließenden und durch das Dichtungselement 10 begrenzten Bereichs 42 des Leitungsbündels 42.

Nach dem Abkühlen wird Formwerkzeug 30 geöffnet und das Dichtungselement 10 wird samt des bereichsweise umspritzten Leitungsbündels 40 in einem sechsten Schritt aus dem Formwerkzeug 30 entnommen.

In einem nachfolgenden siebten Verfahrensschritt wird das Dichtungselement 10 von dem bereichsweise umspritzten Leitungsbündel 40 entfernt, indem das Dichtungselement 10 zerstört wird. Hierbei ist drauf zu achten, dass die Einzelleitungen des Leitungsbündels bzw. deren jeweiliger Kabelmantel nicht zerstört wird.

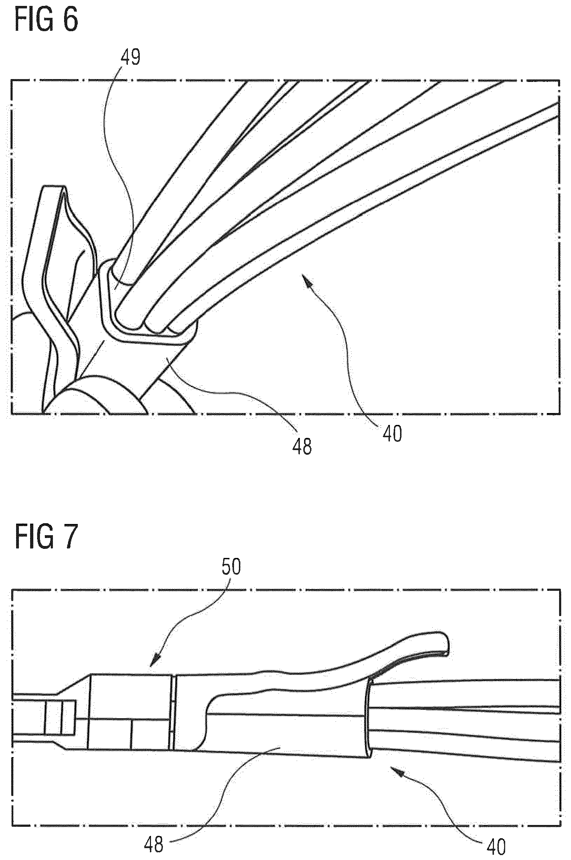

Ein mittels des vorstehend beschriebenen Verfahrens erzeugtes Leitungsbündel 40, das eine Umspritzung 48 umfasst, ist in den Figuren 6 und 7 gezeigt. Das Leitungsbündel 40 ist in der gezeigten Darstellung im Bereich der Umspritzung 48 an einem Steckerelement 50 angebracht. Wie beispielsweise in Figur 6 zu erkennen ist, weist die Umspritzung 48 eine mittels des Dichtungselements 10 erzeugte flache Stirnseite 49 auf, aus der die Einzelleitungen des Leitungsbündels 40 austreten. Die Umspritzung ist gleichmäßig um die Einzelleitungen des Leitungsbündels 40 herum verteilt und umschließt diese dichtend.

## Patentansprüche

1. Verfahren zum Umspritzen wenigstens zweier Einzelleitungen, umfassend die Schritte:
- Aufnehmen der wenigstens zwei Einzelleitungen in einer Ausnehmung (14) eines Dichtungselements (10), wobei die Ausnehmung (34) des Dichtungselements (10) im Wesentlichen komplementär zu einer Umfangsgeometrie der wenigstens zwei Einzelleitungen ausgebildet ist und wenigstens einen Ausnehmungsabschnitt (16, 18, 20, 22) umfasst, wobei eine der wenigstens zwei Einzelleitungen in den wenigstens einen Ausnehmungsabschnitt (16, 18, 20, 22) diesen berührend derart eingebracht wird, dass eine kraftschlüssige Verbindung zwischen dem wenigstens einen Ausnehmungsabschnitt (16, 18, 20, 22) und der einen der wenigstens zwei Einzelleitungen ausgebildet wird, sodass die eine der wenigstens zwei Einzelleitungen von dem wenigstens einen Ausnehmungsabschnitt (16, 18, 20, 22) in einer vorgesehenen Position relativ zu dem Dichtungselement (10) fest angeordnet wird;
- Anbringen des Dichtungselements (10) an einem Formwerkzeug (30);
- Umspritzen eines sich an das Dichtungselement (10) anschließenden und durch das Dichtungselement (10) begrenzten Bereichs (42) der darin aufgenommenen wenigstens zwei Einzelleitungen; und
- Entnehmen des Dichtungselements (10) und der darin aufgenommenen und bereichsweise umspritzten wenigstens zwei Einzelleitungen von dem Formwerkzeug (30).

2. Verfahren nach Anspruch 1, bei dem das Dichtungselement (10) mit den darin aufgenommenen wenigstens zwei Einzelleitungen an dem Formwerkzeug (30) angebracht wird.

3. Verfahren nach Anspruch 1 oder 2, das den weiteren Schritt umfasst:
- Entfernen des Dichtungselements (10) von den bereichsweise umspritzten wenigstens zwei Einzelleitungen.

4. Verfahren nach Anspruch 3, wobei das Dichtungselement (10) zum Entfernen von den bereichsweise umspritzten wenigstens zwei Einzelleitungen zerstört wird.

5. Verfahren nach einem der vorangehenden Ansprüche, bei dem das Dichtungselement (10) plattenförmig ist.

6. Verfahren nach einem der vorangehenden Ansprüche, bei dem das Dichtungselement (10) zum Anbringen an dem Formwerkzeug (30) zumindest abschnittsweise in eine an dem Formwerkzeug (30) ausgebildete Dichtungselementaufnahme (32) eingebracht wird.

7. Verfahren nach einem der vorangehenden Ansprüche, bei dem das Dichtungselement (10) ein Kunststoffbauteil ist.

8. Verfahren nach einem der vorangehenden Ansprüche, bei dem das Dichtungselement (10) mittels eines additiven Fertigungsverfahrens hergestellt wird.

9. Verfahren nach einem der Ansprüche 1 bis 7, bei dem das Dichtungselement (10) mittels eines Spritzgussverfahrens hergestellt wird.

10. Verfahren nach einem der vorangehenden Ansprüche, wobei das Formwerkzeug (30) zum Wärmeableiten während des Umspritzens ein metallisches Material umfasst.

11. Dichtungselement (10) zum Abdichten wenigstens zweier Einzelleitungen während eines bereichsweisen Umspritzens der wenigstens zwei Einzelleitungen,
wobei das Dichtungselement (10) einen Grundkörper (12) mit einer Ausnehmung (14) umfasst, die im Wesentlichen komplementär zu einer Umfangsgeometrie der wenigstens zwei Einzelleitungen ausgebildet ist, um die wenigstens zwei Einzelleitungen aufzunehmen,
wobei die Ausnehmung (14) wenigstens einen Ausnehmungsabschnitt (16, 18, 20, 22) umfasst, wobei eine der wenigstens zwei Einzelleitungen in den wenigstens einen Ausnehmungsabschnitt (16, 18, 20, 22) diesen berührend derart einbringbar ist, dass eine kraftschlüssige Verbindung zwischen dem wenigstens einen Ausnehmungsabschnitt (16, 18, 20, 22) und der einen der wenigstens zwei Einzelleitungen ausgebildet ist, sodass die eine der wenigstens zwei Einzelleitungen von dem wenigstens einen Ausnehmungsabschnitt (16, 18, 20, 22) in einer vorgesehenen Position relativ zu dem Dichtungselement (10) fest anordenbar ist,
wobei das Dichtungselement (10) derart dimensioniert und ausgebildet ist, dass es an einer Dichtungselementaufnahme (32) eines Formwerkzeugs (30) anbringbar ist.

12. Verwenden eines Dichtungselements (10) zum Abdichten wenigstens zweier Einzelleitungen während eines bereichsweisen Umspritzens der wenigstens zwei Einzelleitungen,
wobei das Dichtungselement (10) einen Grundkörper (12) mit einer Ausnehmung (14) umfasst, die im Wesentlichen komplementär zu einer Umfangsgeometrie der wenigstens zwei Einzelleitungen ausgebildet ist, um die wenigstens zwei Einzelleitungen aufzunehmen,
wobei die Ausnehmung (14) wenigstens einen Ausnehmungsabschnitt (16, 18, 20, 22) umfasst, wobei eine der wenigstens zwei Einzelleitungen in den wenigstens einen Ausnehmungsabschnitt (16, 18, 20, 22) diesen berührend derart einbringbar ist, dass eine kraftschlüssige Verbindung zwischen dem wenigstens einen Ausnehmungsabschnitt (16, 18, 20, 22) und der einen der wenigstens zwei Einzelleitungen ausgebildet ist, sodass die eine der wenigstens zwei Einzelleitungen von dem wenigstens einen Ausnehmungsabschnitt (16, 18, 20, 22) in einer vorgesehenen Position relativ zu dem Dichtungselement (10) fest anordenbar ist, und
wobei das Dichtungselement (10) an einem Formwerkzeug (30) anbringbar ist.

## Claims

1. Method of overmolding at least two individual conductors, comprising the steps of:
- inserting the at least two individual conductors into a recess (14) of a sealing member (10), wherein the recess (34) of the sealing member (10) is formed substantially complementary to a circumferential geometry of the at least two individual conductors and comprises at least one recess portion (16, 18, 20, 22), wherein one of the at least two individual conductors is inserted into the at least one recess portion (16, 18, 20, 22) in contact therewith in such a way that a force-locking connection is formed between the at least one recess portion (16, 18, 20, 22) and the one of the at least two individual conductors so that the one of the at least two individual conductors is fixedly arranged by the at least one recess portion (16, 18, 20, 22) in an intended position relative to the sealing member (10);
- attaching the sealing member (10) to a mold (30);
- overmolding a portion (42) of the at least two individual conductors received therein adjacent the sealing member (10) and bounded by the sealing member (10); and
- removing the sealing member (10) and the at least two individual conductors received therein and regionally overmolded from the mold (30).

2. Method of claim 1, wherein the sealing member (10) is attached to the mold (30) with the at least two individual conductors received therein.

3. Method of claim 1 or 2, comprising the further step of:
- Removing the sealing member (10) from the area-wise overmolded at least two individual conductors.

4. Method of claim 3, wherein the sealing member (10) is destroyed for removal from the at least two area-wise overmolded individual conductors.

5. Method according to any one of the preceding claims, wherein the sealing member (10) is plate-shaped.

6. Method according to any one of the preceding claims, wherein the sealing member (10) for attachment to the mold (30) is inserted at least regionally into a sealing member receptacle (32) formed on the mold (30).

7. Method according to any one of the preceding claims, wherein the sealing member (10) is a plastic component.

8. Method according to any one of the preceding claims, wherein the sealing member (10) is manufactured by means of an additive manufacturing process.

9. Method according to any one of claims 1 to 7, in which the sealing member (10) is produced by means of an injection molding process.

10. Method according to any one of the preceding claims, wherein the mold (30) comprises a metallic material for heat dissipation during overmolding.

11. Sealing member (10) for sealing at least two individual conductors during area-wise overmolding of the at least two individual conductors,
wherein the sealing member (10) comprises a base body (12) having a recess (14) formed substantially complementary to a circumferential geometry of the at least two individual conductors to receiving the at least two individual conductors,
wherein the recess (14) comprises at least one recess portion (16, 18, 20, 22), wherein one of the at least two individual conductors is insertable into the at least one recess portion (16, 18, 20, 22) in contact therewith in such a manner that a force-locking connection is formed between the at least one recess portion (16, 18, 20, 22) and the one of the at least two individual conductors, so that the one of the at least two individual conductors can be fixedly arranged by the at least one recess portion (16, 18, 20, 22) in an intended position relative to the sealing member (10),
wherein the sealing member (10) is dimensioned and configured to be attachable to a sealing member receptacle (32) of a mold (30).

12. Using a sealing member (10) for sealing at least two individual conductors during area-wise overmolding of the at least two individual conductors,
wherein the sealing member (10) comprises a base body (12) having a recess (14) formed substantially complementary to a circumferential geometry of the at least two individual conductors to receive the at least two individual conductors,
wherein the recess (14) comprises at least one recess portion (16, 18, 20, 22), wherein one of the at least two individual conductors is insertable into the at least one recess portion (16, 18, 20, 22) in contact therewith in such a manner that a force-locking connection is formed between the at least one recess portion (16, 18, 20, 22) and the one of the at least two individual conductors, so that the one of the at least two individual conductors can be fixedly arranged by the at least one recess portion (16, 18, 20, 22) in an intended position relative to the sealing member (10),
wherein the sealing member (10) is attachable to a mold (30).

## Revendications

1. Procédé de surmoulage d'au moins deux lignes individuelles, comprenant les étapes de :
- logement desdites au moins deux lignes individuelles dans un évidement (14) d'un élément d'étanchéité (10), l'évidement (34) de l'élément d'étanchéité (10) étant formé de manière sensiblement complémentaire à une géométrie périphérique desdites au moins deux lignes individuelles et comprenant au moins une partie d'évidement (16, 18, 20, 22), l'une desdites au moins deux lignes individuelles étant introduite dans ladite au moins une partie d'évidement (16, 18, 20, 22) en contact avec celle-ci de telle sorte qu'une liaison par adhérence soit formée entre ladite au moins une partie d'évidement (16, 18, 20, 22) et ladite une desdites au moins deux lignes individuelles, de sorte que ladite une desdites au moins deux lignes individuelles est disposée de manière fixe par ladite au moins une partie d'évidement (16, 18, 20, 22) dans une position prévue par rapport à l'élément d'étanchéité (10) ;
- montage de l'élément d'étanchéité (10) sur un moule (30) ;
- surmoulage d'une zone (42) adjacente à l'élément d'étanchéité (10) et délimitée par l'élément d'étanchéité (10) desdites au moins deux lignes individuelles qui y sont logées ; et
- retrait de l'élément d'étanchéité (10) et desdites au moins deux lignes individuelles y logées et surmoulées dans certaines zones du moule (30).

2. Procédé selon la revendication 1, dans lequel l'élément d'étanchéité (10) avec lesdites au moins deux lignes individuelles qui y sont logées est monté sur le moule (30).

3. Procédé selon la revendication 1 ou 2, qui comprend l'étape supplémentaire de :
- enlèvement de l'élément d'étanchéité (10) desdites au moins deux lignes individuelles surmoulées dans certaines zones.

4. Procédé selon la revendication 3, dans lequel l'élément d'étanchéité (10) est détruit pour être retiré desdites au moins deux lignes individuelles surmoulées dans certaines zones.

5. Procédé selon l'une des revendications précédentes, dans lequel l'élément d'étanchéité (10) est en forme de plaque.

6. Procédé selon l'une des revendications précédentes, dans lequel l'élément d'étanchéité (10) est inséré au moins sur certaines parties dans un logement d'élément d'étanchéité (32) formé sur le moule (30) pour être monté sur le moule (30).

7. Procédé selon l'une des revendications précédentes, dans lequel l'élément d'étanchéité (10) est un composant en matière plastique.

8. Procédé selon l'une des revendications précédentes, dans lequel l'élément d'étanchéité (10) est fabriqué au moyen d'un procédé de fabrication additive.

9. Procédé selon l'une des revendications 1 à 7, dans lequel l'élément d'étanchéité (10) est fabriqué au moyen d'un procédé de moulage par injection.

10. Procédé selon l'une des revendications précédentes, dans lequel le moule (30) comprend un matériau métallique pour dissiper la chaleur pendant le surmoulage.

11. Élément d'étanchéité (10) pour assurer l'étanchéité d'au moins deux lignes individuelles pendant un surmoulage dans certaines zones desdites au moins deux lignes individuelles,
dans lequel l'élément d'étanchéité (10) comprend un corps de base (12) avec un évidement (14) qui est formé de manière sensiblement complémentaire à une géométrie périphérique desdites au moins deux lignes individuelles afin de loger lesdites au moins deux lignes individuelles,
dans lequel l'évidement (14) comprend au moins une partie d'évidement (16, 18, 20, 22), l'une desdites au moins deux lignes individuelles pouvant être introduite dans ladite au moins une partie d'évidement (16, 18, 20, 22) en contact avec celle-ci de telle sorte qu'une liaison par adhérence soit formée entre ladite au moins une partie d'évidement (16, 18, 20, 22) et ladite une desdites au moins deux lignes individuelles, de sorte que ladite une desdites au moins deux lignes individuelles peut être disposée de manière fixe par ladite au moins une partie d'évidement (16, 18, 20, 22) dans une position prévue par rapport à l'élément d'étanchéité (10),
dans lequel l'élément d'étanchéité (10) est dimensionné et formé de manière à pouvoir être monté sur un logement d'élément d'étanchéité (32) d'un moule (30).

12. Utilisation d'un élément d'étanchéité (10) pour assurer l'étanchéité d'au moins deux lignes individuelles pendant un surmoulage dans certaines zones desdites au moins deux lignes individuelles,
dans lequel l'élément d'étanchéité (10) comprend un corps de base (12) avec un évidement (14) qui est formé de manière sensiblement complémentaire à une géométrie périphérique desdites au moins deux lignes individuelles afin de loger lesdites au moins deux lignes individuelles,
dans lequel l'évidement (14) comprend au moins une partie d'évidement (16, 18, 20, 22), l'une desdites au moins deux lignes individuelles pouvant être introduite dans ladite au moins une partie d'évidement (16, 18, 20, 22) en contact avec celle-ci de telle sorte qu'une liaison par adhérence soit formée entre ladite au moins une partie d'évidement (16, 18, 20, 22) et ladite une desdites au moins deux lignes individuelles, de sorte que ladite une desdites au moins deux lignes individuelles peut être disposée de manière fixe par ladite au moins une partie d'évidement (16, 18, 20, 22) dans une position prévue par rapport à l'élément d'étanchéité (10),
dans lequel l'élément d'étanchéité (10) peut être monté sur un moule (30).
